# EUROPEAN PATENT APPLICATION

(11) **EP 4 741 039 A1**
(43) Date of publication of application: **13.05.2026**
(21) Application number: 24835121.5
(22) Date of filing: 08.05.2024
(51) Int. Cl.: B01D 47/16, B01D 47/18, B01D 47/06

(54) **METHOD AND APPARATUS FOR MANUFACTURING NITRILE USING CONTROLLED SPRAY LIQUID INPUT PRESSURE**

(30) Priority: 05.07.2023 CN 202310819805; 05.07.2023 CN 202310819830
(71) Applicant: China Petroleum & Chemical Corporation, Beijing 100728 (CN); Sinopec (Shangai) Research Institute of Petrochemical Technology Co., Ltd., Shanghai 201208 (CN)
(72) Inventor: ZHAO, Le, Shanghai 201208 (CN); WU, Lianghua, Shanghai 201208 (CN)
(74) Representative: karo IP
(86) International application number: PCT/CN2024/091572
(87) International publication number: WO 2025/007636

(57) **Abstract**

The present invention relates to a process and device for producing nitrile with controlled input pressure of spray liquid. The producing process can atomize the spray liquid, increase the contact area with ammonia, and improve mass transfer efficiency. The process for producing the nitrile comprises: a step of subjecting a hydrocarbon feedstock to ammoxidation reaction to produce a reaction product containing nitrile, and a step of spraying a spraying liquid onto the reaction product through a spraying device to cool the reaction product, wherein the spraying device comprises a spraying liquid inlet, a first spraying pipe in fluid communication with the spraying liquid inlet, a plurality of second spraying pipes in fluid communication with the first spraying pipe and extending perpendicularly to the first spraying pipe toward both sides thereof, a plurality of third spraying pipes in fluid communication with the second spraying pipes and extending perpendicularly to the second spraying pipes toward both sides thereof, and nozzles located at the ends of the third spraying pipes and in fluid communication therewith, wherein in the cooling step, the spraying liquid input pressure at the spraying liquid inlet is controlled to be 0.06-1.00 MPaG.

## Description

### Technical Field

The present invention relates to the technical field of gas absorption, and more particularly, to a process and device for producing nitrile with controlled input pressure of spraying liquid.

### Background

In the process route for producing corresponding nitriles by ammonification or ammoxidation, in order to maximize the conversion of feedstock gases such as hydrocarbons, the feedstock gas ammonia is generally used in an excess amount, i.e., the molar ratio of ammonia to hydrocarbon feedstock gas being greater than 1. For example, in ammoxidation of propylene, the ammonia ratio (molar ratio of ammonia to propylene) is 1.10-1.35, and in ammoxidation of aromatic hydrocarbons, the ammonia ratio (molar ratio of ammonia to aromatic hydrocarbons) is 4-8. Therefore, the reactor outlet tail gas necessarily contains unreacted ammonia. On one hand, as in acrylonitrile production processes, reaction gases such as acrylonitrile are prone to polymerization under alkaline conditions. On the other hand, the escape of even a small amount of unreacted ammonia can easily cause environmental pollution. Therefore, in ammonification or ammoxidation processes, it is desired to use an absorption device (generally called as an ammonia absorption column or quench column) to remove unreacted ammonia from the gas phase using acid or water, which process is very necessary.

With the development of production technology, production loads are continuously increasing, and the trend towards large-scale of devices represents the future development direction. The higher the device load, the larger the equipment, including the absorption device. It is known that in the absorption device, the circulating liquid (spraying liquid) is distributed within the absorption device via a spraying device and contacted countercurrently with the ammonia-containing gas to be absorbed, achieving the purpose of removing residual ammonia from the gas phase. CN105425849 teaches removal of residual ammonia by adjusting the amount of acid added based on the pH value of the effluent from the absorption device. CN1199940 teaches to improve the mass transfer and heat transfer effect between gas and liquid phases by adding internal components at the bottom of the absorption device, which in fact addresses the issue of uniform distribution of the ammonia-containing gas phase. However, the absorption device is still inevitably subjected to ammonia breakthrough, i.e., a small amount of ammonia escape still existing, leading to product loss in subsequent refining and separation units or causing environmental pollution.

In the ammonia absorption methods of the prior art, after long-term operation of the absorption device, the ammonia content in the absorption tail gas increases significantly compared with the initial period of the operation.

### Summary of the Invention

The inventors of the present invention have found that as the circulating liquid contains a certain concentration of easily deposition-prone substances such as ammonium salts and polymers, after long operation cycles, these easily deposition-prone substances tend to adhere to the inner walls of the spraying pipes and nozzles of the spraying device, resulting in insufficient nozzle pressure of the spraying device and affecting the atomization effect. Furthermore, the farther from the spraying liquid inlet, the more severe this accumulation problem becomes. After long-term operation, the accumulation degrees at different positions of the spraying device varies, leading to different spraying liquid atomization degrees at different nozzles. In areas with poor atomization, ammonia escape becomes more significant. In existing devices, the problem of insufficient pressure at the nozzle farthest from the spraying device inlet is particularly obvious. Ammonia absorption is not complete, and a small amount of ammonia still breaks through to subsequent equipment.

The inventors of the present invention, by analyzing the accumulation degrees of easily deposition-prone substances at various parts of the spraying device as the operation cycle continues and its impact on the atomization effect, and comprehensively considering factors such as the overall uneven accumulation degrees of the spraying device and the pressure drop along the pipe course, have found that by setting the spraying liquid input pressure at the spraying liquid inlet of the spraying device to a specific value, the uneven accumulation phenomenon at different positions of the spraying device after long-term operation can be reduced or eliminated, thereby achieving overall uniform atomization degree.

The inventors of the present invention have also found that in a single-stage ammonia absorption column, the ammonia-containing gas is fed into the column along the inlet semicircular pipeline, wherein the gas is delivered from bottom to top, contacting countercurrently with the acidic circulating liquid, during which process, gaseous ammonia is neutralized by the acid. Due to the uneven distribution of ammonia in the gas phase on the cross-section where it is contacted with the first layer of acidic circulating liquid in the column in existing devices, the distribution of ammonia on the cross-section at various axial positions is also uneven during the gas rising. Usually, the concentration of acid in the circulating liquid is increased to meet the ammonia absorption rate in areas with relatively high ammonia content. Therefore, the acid consumption in existing devices is relatively high.

The inventors of the present invention have found that by controlling the spraying liquid input pressure at the spraying liquid inlet within a specific numerical range, and further preferably by setting the vertical distance between the gas inlet and the spraying liquid inlet within a specific numerical range, this problem can be solved. The present invention is completed based on this discovery.

Specifically, the present invention relates to the following aspects.
1. A process for producing a nitrile, comprising a step of subjecting a hydrocarbon feedstock to ammoxidation reaction to produce a reaction product containing nitrile (called as reaction step), and a step of spraying a spraying liquid onto the reaction product through a spraying device to cool the reaction product (called as cooling step), wherein the spraying device comprises a spraying liquid inlet, a first spraying pipe in fluid communication with the spraying liquid inlet, a plurality of (e.g., 10-26, preferably 12-22) second spraying pipes in fluid communication with the first spraying pipe and extending perpendicularly to the first spraying pipe toward both sides thereof, a plurality of (e.g., 4-26, preferably 6-22) third spraying pipes in fluid communication with the second spraying pipes and extending perpendicularly to the second spraying pipes toward both sides thereof, and nozzles located at the ends of the third spraying pipes and in fluid communication therewith, wherein in the cooling step, the spraying liquid input pressure at the spraying liquid inlet is controlled to be 0.06-1.00 MPaG (preferably 0.12-0.90 MPaG, more preferably 0.18-0.80 MPaG).
2. The production process according to any preceding or subsequent aspect, wherein the plurality of second spraying pipes extend perpendicularly to the first spraying pipe toward its opposite sides substantially parallel in the horizontal direction, and/or, the plurality of third spraying pipes extend perpendicularly to the second spraying pipes toward their opposite sides substantially parallel in the horizontal direction.
3. The producing process according to any preceding or subsequent aspect, wherein the first spraying pipe has an inner diameter of 160-480 mm (preferably 200-450 mm) and a length of 4500-11500 mm (preferably 4800-10500 mm), and/or, the plurality of second spraying pipes are the same as or different from each other, each independently having an inner diameter of 30-150 mm (preferably 40-120 mm) and each independently having a length of 1200-5750 mm (preferably 1800-5250 mm), and/or, the plurality of third spraying pipes are the same as or different from each other, each independently having an inner diameter of 10-60 mm (preferably 15-50 mm) and each independently having a length of 160-325 mm (preferably 175-300 mm).
4. The producing process according to any preceding or subsequent aspect, wherein the nozzles are the same as or different from each other, each independently having an inner diameter (referring to the nozzle outlet) of 3-20 mm (preferably 6-14 mm), a rotating chamber diameter of 10.0-55.0 mm (preferably 13.0-45.0 mm), and a spray angle of 65-120° (preferably 70-100°).
5. The producing process according to any preceding or subsequent aspect, wherein on the first spraying pipe, the horizontal spacing between two adjacent second spraying pipes is 640-1300 mm (preferably 700-1200 mm), and/or, on a same second spraying pipe, the horizontal spacing between two adjacent third spraying pipes is 320-650 mm (preferably 350-600 mm), and/or, on two adjacent second spraying pipes, the linear distance, M, between the end of an arbitrary third spraying pipe on one second spraying pipe and the end of an arbitrary third spraying pipe on another adjacent second spraying pipe is not less than 320 mm (preferably not less than 350 mm).
6. The producing process according to any preceding or subsequent aspect, wherein the nozzles are the same as or different from each other, each independently having a spraying liquid ejection rate of 0.5-7.5 t/h (preferably 0.9-6.5 t/h), and/or, the nozzles are the same as or different from each other, each independently having a spraying liquid ejection pressure at the nozzle outlet of 0.03-0.85 MPaG (preferably 0.04-0.65 MPaG).
7. The producing process according to any preceding or subsequent aspect, wherein in the cooling step, the spraying liquid and the reaction product are contacted in a countercurrent manner.
8. The producing process according to any preceding or subsequent aspect, wherein in the cooling step, the flow ratio of the spraying liquid to the reaction product is 15-25:1.
9. The producing process according to any preceding or subsequent aspect, wherein the cooling step is carried out in an absorption device, and a plurality of (e.g., 2-10, preferably 4-8) the spraying devices are arranged in layers inside the absorption device along the central axis direction of the absorption device at predetermined vertical intervals.
10. The producing process according to any preceding or subsequent aspect, wherein when a cross-section is obtained by cutting the absorption device at a direction perpendicular to the central axis of the absorption device, at least one (preferably all) selected from the first spraying pipe, the second spraying pipes, and the third spraying pipes of one of the plurality of spraying devices and at least one (preferably all) selected from the first spraying pipe, the second spraying pipes, and the third spraying pipes of another of the plurality of spraying devices substantially coincide in projection on the cross-section.
11. The producing process according to any preceding or subsequent aspect, wherein all nozzles of the one spraying device and all nozzles of the another spraying device substantially coincide in projection on the cross-section, and/or, two nozzles whose projections substantially coincide have the same spray diameter.
12. The producing process according to any preceding or subsequent aspect, wherein the vertical spacing between two adjacent spraying devices (calculated as the vertical spacing between the spraying liquid inlets of the spraying devices) is 650-1350 mm (preferably 750-1200 mm).
13. The producing process according to any preceding or subsequent aspect, wherein the difference (absolute value) in the spraying liquid input pressures at the spraying liquid inlets of any two spraying devices is less than 0.024 MPa (preferably less than 0.018 MPa, more preferably less than 0.012 MPa).
14. The producing process according to any preceding or subsequent aspect, wherein the absorption device has an inner diameter of 4.5-11.5 m (preferably 4.8-10.5 m).
15. The producing process according to any preceding or subsequent aspect, wherein the absorption device further comprises a shell and a gas inlet, and the reaction product is fed into the absorption device through the gas inlet, the gas inlet being located below the spraying device along the central axis direction of the absorption device.
16. The producing process according to any preceding or subsequent aspect, wherein the vertical distance between the gas inlet and the spraying liquid inlet of the spraying device (when more than one spraying device are present, referring to the spraying device closest to the gas inlet) is 800-6000 mm (preferably 1000-5000 mm), and/or, the gas inlet has an inner diameter of 800-1900 mm (preferably 900-1700 mm), and/or, the linear velocity of the gas inside the shell is 0.6-1.5 m/s (preferably 0.7-1.3 m/s).
17. The producing process according to any preceding or subsequent aspect, wherein in the internal space of the absorption device between the gas inlet and the spraying device (when more than one spraying device are present, referring to the spraying device closest to the gas inlet), no mechanical component capable of substantially affecting the gas flow is arranged.
18. The producing process according to any preceding or subsequent aspect, wherein in the reaction step, the hydrocarbon feedstock is propylene, and the molar ratio of propylene/ammonia/air (calculated as molecular oxygen) is 1:1.1-1.3:1.8-2.0, and the reaction comprises a temperature of 420-440°C, a reaction pressure (gauge pressure) of 0.03-0.14 MPa, and a catalyst weight hourly space velocity of 0.06-0.15 h⁻¹, or alternatively, the hydrocarbon feedstock is isobutylene, and the molar ratio of isobutylene/ammonia/air (calculated as molecular oxygen) is 1:1.3-1.6:2.2-2.8, and the reaction comprises a temperature of 395-420°C, a reaction pressure (gauge pressure) of 0.03-0.14 MPa, and a catalyst weight hourly space velocity of 0.08-0.17 h⁻¹.
19. The producing process according to any preceding or subsequent aspect, wherein in the cooling step, the spraying liquid cools the reaction product from 195-235°C to 81-86°C, and/or, in the cooling step, the spraying liquid reduces the ammonia content of the reaction product to 150 ppm or less.
20. A device for producing nitrile, comprising a reactor, an absorption device, and a pressure controller, wherein the reactor is configured to subject a hydrocarbon feedstock to ammoxidation reaction to produce a reaction product containing nitrile, the absorption device is configured to spray a spraying liquid onto the reaction product through a plurality of spraying devices arranged therein to cool the reaction product, wherein the spraying devices each independently comprise a spraying liquid inlet, a first spraying pipe in fluid communication with the spraying liquid inlet, a plurality of (e.g., 10-26, preferably 12-22) second spraying pipes in fluid communication with the first spraying pipe and extending perpendicularly to the first spraying pipe toward both sides thereof, a plurality of (e.g., 4-26, preferably 6-22) third spraying pipes in fluid communication with the second spraying pipes and extending perpendicularly to the second spraying pipes toward both sides thereof, and nozzles located at the ends of the third spraying pipes and in fluid communication therewith, and the pressure controller is configured to control the spraying liquid input pressure at the spraying liquid inlet of each spraying device to be 0.06-1.00 MPaG (preferably 0.12-0.90 MPaG, more preferably 0.18-0.80 MPaG).
20. 21. The producing device according to any preceding or subsequent aspect, wherein the absorption device further comprises a shell and a gas inlet, the gas inlet is located below the spraying device along the central axis direction of the absorption device, and the vertical distance between the gas inlet and the spraying liquid inlet of the spraying device (when more than one spraying device are present, referring to the spraying device closest to the gas inlet) is 800-6000 mm (preferably 1000-5000 mm).

### Technical Effects

According to the present invention, even after long-term operation (e.g., continuous operation for 18 months or longer), the ammonia content in the absorption tail gas does not increase significantly compared with the initial period of the operation, and good ammonia absorption effect can be maintained for a long period, reducing ammonia escape.

According to the present invention, ammonia gas is uniformly distributed in the absorption column, which is beneficial for ammonia absorption.

According to the present invention, gas-liquid contact is sufficient, the ammonia absorption effect is excellent, and the amount of acid used can be reduced.

### Brief Description of the Drawings

Fig.1 is a schematic front view of an ammonia absorption column of the prior art.
Fig.2 is a schematic front view of an ammonia absorption column of the prior art.
Fig.3a and Fig.3b are schematic front views of an ammonia absorption column of the present invention.
Fig.4A and Fig.4B are schematic front views of an ammonia absorption column of the present invention.
Fig.5 is a schematic top view of a spraying device of the present invention.
Fig.6A and Fig.6B are schematic top views of a spraying device of the present invention.

Illustration of reference signs:
1: Ammonia absorption column
2: Demister internal component of ammonia absorption column
3: Spraying device internal component of ammonia absorption column, 3a-3f being spraying devices
4: Gas distributor internal component of ammonia absorption column
5: Spraying device internal component of ammonia absorption column, 5a-5b being spraying devices
6: Upper section circulation pump
7: Lower section circulation pump
8: Ammonia-containing gas feed
9: Gas phase output of ammonia absorption column
10: Upper section water supplement
11: Lower section wastewater output
12: Upper section ammonium salt-containing solution output
13: Lower section circulating liquid
14: Upper section circulating liquid
15: Acid-containing solution
16: Circulating liquid
17: Circulation pump
18: Spraying device inlet
19: First spraying pipe of spraying device
20a, 20b: Second spraying pipes of spraying device
21: Third spraying pipe of spraying device
22: Atomizing nozzle of spraying device
23: Gas distributor
P1, P2, P3, P4, P5, P6: Inlet pressure of spraying liquid of spraying device.

### Embodiments

The specific embodiments of the present invention will be described in detail below, but it should be pointed out that the protection scope of the present invention is not limited by these specific embodiments, but is determined by the claims attached.

All publications, patent applications, patents, and other references mentioned in this specification are herein incorporated by reference in their entirety. Unless defined otherwise, all technical and scientific terms used herein are understood same as the meanings commonly known to those skilled in the art. In case of conflict, definitions according to the present specification will control.

When the specification introduces materials, substances, processes, steps, devices, components, or the like initiated with "known to those ordinary skill in the art", "prior art", or the like, it is intended that the subject matter so initiated encompass not only those conventionally used in the art at the time of filing this application, but also those may not be so commonly used at the present time, but will become known in the art as being suitable for a similar purpose.

In the context of this specification, the term "substantially" means a deviation not more than 20%, preferably not more than 10% or 5%.

All percentages, parts, ratios, and the like referred to in the specification are based on weight and pressures are gauge pressures unless explicitly indicated.

In the context of the present invention, any two or more embodiments or aspects of the present invention may be arbitrarily combined, and the technical solutions resulted are part of the original disclosure of the present specification, and also fall within the scope of the present invention.

In the context of this specification, all technical details not mentioned, etc., directly apply the relevant information known in the art.

According to one embodiment of the present invention, a process for producing a nitrile, particularly (meth)acrylonitrile, is involved.

According to one embodiment, the process for producing the nitrile comprises a step of subjecting a hydrocarbon feedstock to ammoxidation reaction to produce a reaction product containing nitrile (called as reaction step), and a step of spraying a spraying liquid onto the reaction product through a spraying device to cool the reaction product (called as cooling step).

According to one embodiment, the spraying device comprises a spraying liquid inlet, a first spraying pipe in fluid communication with the spraying liquid inlet, a plurality of (e.g., 10-26, preferably 12-22) second spraying pipes in fluid communication with the first spraying pipe and extending perpendicularly to the first spraying pipe toward both sides thereof, a plurality of (e.g., 4-26, preferably 6-22) third spraying pipes in fluid communication with the second spraying pipes and extending perpendicularly to the second spraying pipes toward both sides thereof, and nozzles located at the ends of the third spraying pipes and in fluid communication therewith.

The connection means between the various spraying pipes and between the third spraying pipes and the nozzles, etc. is not specifically limited by the present invention, and conventional connection means in the art can be adopted. For example, fixed connections or detachable connections can be used, preferably threaded connections, or other detachable connection means, without specific limitation.

According to one embodiment, the spraying liquid is water or an acidic aqueous solution. Preferably, the ammonia-containing gas, from bottom to top, is contacted countercurrently with the acidic aqueous solution as the spraying liquid flowing from top to bottom, and the acidic H⁺ contained in the aqueous solution neutralizes ammonia to remove it. Here, the acidic aqueous solution is an aqueous solution of an acidic substance. The acidic substance can be an inorganic acid, such as hydrochloric acid, sulfuric acid, phosphoric acid; or can also be an organic acid, such as acrylic acid, acetic acid; or can also be an acidic salt, such as ammonium sulfate, without specific limitation. According to the present invention, the atomized droplet of the spraying liquid ejected from the nozzle has a very small droplet size, usually only 50-5000 µm, which can effectively achieve the gas absorption function, especially the ammonia removal function.

According to one embodiment, in the cooling step, the spraying liquid input pressure at the spraying liquid inlet is controlled to be 0.06-1.00 MPaG (preferably 0.12-0.90 MPaG, more preferably 0.18-0.80 MPaG). The inventors of the present invention have found that the circulating liquid is fed into the spraying device through the spraying device inlet, passing through the first spraying pipe, the second spraying pipes and the third spraying pipes, and is delivered into the absorption column through the nozzles at the ends of the third spraying pipes. As the pressure gradually decreases along the fluid flow direction, and the droplet size is inversely proportional to the pressure, then the droplet size continuously increases along the circulating liquid fluid flow direction, i.e., the droplet size formed at the atomizing nozzle far from the spray inlet in the fluid flow direction is larger than that formed at the atomizing nozzle near the spray inlet in the fluid flow direction, which results in lower ammonia absorption efficiency at the far end from the spray inlet in the fluid flow direction than that at the near end. It is then essential to control the spraying liquid input pressure at the spraying liquid inlet within the range specified above for achieving sufficient pressure at the far-end nozzle to guarantee the atomization effect. In addition, as the operation of the device continues for a long time, viscous polymers are produced during the reaction process, mixed with ammonium salts in the circulating liquid, and adhered to the inner walls of the spraying pipes and nozzles, leading to increasing resistance along the pipe course, especially after 18 months of operation, the resistance increasing rate becomes more obvious, further reducing the pressure at the far-end nozzle, resulting in larger droplet size and worse atomization effect at the far-end nozzle. According to the present invention, by controlling the spraying liquid input pressure at the spraying liquid inlet within the range specified above, even after long-term of continuous operation, sufficient pressure at the far-end nozzle can be met, ensuring the atomization effect.

According to one embodiment, the plurality of second spraying pipes extend substantially in parallel in the horizontal direction perpendicularly to the first spraying pipe toward its opposite sides.

According to one embodiment, the plurality of third spraying pipes extend substantially in parallel in the horizontal direction perpendicularly to the second spraying pipes toward their opposite sides.

According to one embodiment, the first spraying pipe has an inner diameter of 160-480 mm (preferably 200-450 mm) and a length of 4500-11500 mm (preferably 4800-10500 mm).

According to one embodiment, the plurality of second spraying pipes are the same as or different from each other, each independently having an inner diameter of 30-150 mm (preferably 40-120 mm) and a length of 1200-5750 mm (preferably 1800-5250 mm).

According to one embodiment, the plurality of third spraying pipes are the same as or different from each other, each independently having an inner diameter of 10-60 mm (preferably 15-50 mm) and a length of 160-325 mm (preferably 175-300 mm). According to one embodiment, the nozzles are the same as or different from each other, each independently having an inner diameter (referring to the nozzle outlet) of 3-20 mm (preferably 6-14 mm), a rotating chamber diameter of 10.0-55.0 mm (preferably 13.0-45.0 mm), and a spray angle of 65-120° (preferably 70-100°). According to the present invention, the rotating chamber can adopt any known rotating chamber structure in the art, as long as it can allow the spraying liquid leave the nozzle outlet in a rotating manner after passing through the rotating chamber, without particular limitation. According to one embodiment, on the first spraying pipe, the horizontal spacing between two adjacent second spraying pipes is 640-1300 mm (preferably 700-1200 mm).

According to one embodiment, on a same second spraying pipe, the horizontal spacing between two adjacent third spraying pipes is 320-650 mm (preferably 350-600 mm).

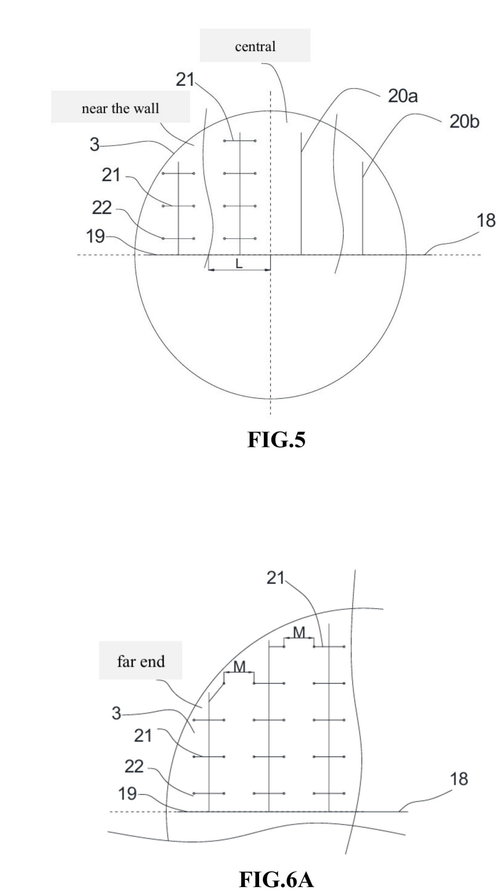

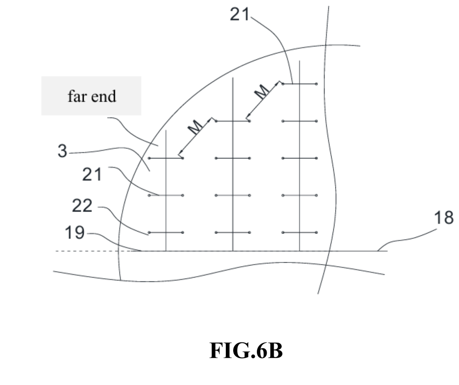

According to one embodiment, on two adjacent second spraying pipes, the linear distance, M, between the end of an arbitrary third spraying pipe on one second spraying pipe and the end of an arbitrary third spraying pipe on another adjacent second spraying pipe (as shown in Fig.6A and Fig.6B) is not less than 320 mm, preferably not less than 350 mm. The inventors of the present invention have found that in order to improve the ammonia absorption efficiency, generally, any position on the cross-section inside the column is covered by at least two or more overlapping conical liquid surfaces formed taking the nozzle as center, which is under the same situation at the column wall. If the distance between the ends of two spraying pipes is too large, limited by the nozzle structure, it is difficult to meet the requirement that any position at the column wall is covered by overlapping liquid surfaces sprayed from two or more nozzles, which increases the chance of ammonia escaping from the "gaps". If the distance between the ends of two spraying pipes is too small, in order to ensure the atomization quality of the spraying liquid, the amount of circulating liquid in the ammonia absorption column must be increased, i.e., increasing the pump energy consumption.

According to one embodiment, the nozzles are the same as or different from each other, each independently having a spraying liquid ejection rate of 0.5-7.5 t/h (preferably 0.9-6.5 t/h).

According to a preferred embodiment, the nozzles are the same as or different from each other, each independently having a spraying liquid ejection pressure at the nozzle outlet of 0.03-0.85 MPaG (preferably 0.04-0.65 MPaG). The inventors of the present invention have found that for the atomizing nozzles of the ammonia absorption column, pressure is one of the main factors promoting liquid to form droplets. Within a certain pressure range, the droplet size increases as the pressure decreases. Compared to large atomized droplets, small atomized droplets are generally considered to have better mass and heat transfer efficiency. When the spraying liquid ejection pressure at the nozzle outlet is less than 0.03 MPaG, the atomization effect of the acidic circulating liquid after passing through the spraying device is poor, and the droplet size is large, i.e., the contact with ammonia is insufficient. When the spraying liquid ejection pressure at the nozzle outlet is greater than 0.85 MPaG, the atomization effect of the acidic circulating liquid after passing through the spraying device is good, whilst the droplet size is too small, such that the liquid is easy to be entrained by the gas out of the ammonia absorption column, and the ammonium salt dissolved in the liquid causes unnecessary trouble for subsequent processes. In addition, as the operation of the device continues for a long time, viscous polymers produced during the operation also adhere to the inner cavity of the nozzle, increasing the resistance of the nozzle and causing a decrease in pressure at the nozzle outlet. For example, after 18 months of continuous operation, dirt adheres to the inner cavity of the nozzle, changing the moving behavior of the spraying liquid in the nozzle, especially increasing the instability of the atomization at the far-end nozzle, and this instability becomes more significant as the operation time of the device prolongs. According to the present invention, by controlling the spraying liquid ejection pressure at the nozzle outlet within the range specified above, even after long-term of continuous operation, the atomization at the far-end nozzle can be stabilized, ensuring the atomization effect.

According to one embodiment, in the cooling step, the spraying liquid and the reaction product are contacted in a countercurrent manner.

According to one embodiment, in the cooling step, the flow ratio of the spraying liquid to the reaction product is 15-25: 1.

According to one embodiment, the cooling step is carried out in an absorption device (particularly an ammonia absorption column or quench column), and a plurality of (e.g., 2-10, preferably 4-8) the spraying devices are arranged in layers inside the absorption device along the central axis direction of the absorption device at predetermined vertical intervals.

According to one embodiment, when a cross-section is obtained by cutting the absorption device at a direction perpendicular to the central axis of the absorption device, at least one (preferably all) selected from the first spraying pipe, the second spraying pipes, and the third spraying pipes of one of the plurality of spraying devices and at least one (preferably all) selected from the first spraying pipe, the second spraying pipes, and the third spraying pipes of another of the plurality of spraying devices substantially coincide in projection on the cross-section.

According to one embodiment, all nozzles of the one spraying device and of the another spraying device substantially coincide in projection on the cross-section.

According to one embodiment, two nozzles whose projections substantially coincide have the same spray diameter.

According to one embodiment, the vertical spacing between two adjacent spraying devices (calculated as the vertical spacing between the spraying liquid inlets of the spraying devices) is 650-1350 mm (preferably 750-1200 mm). The inventors of the present invention have found that when the vertical spacing between two adjacent spraying devices is less than 650 mm, for an ammonia absorption column with the same number of spraying devices, the contact time between the rising ammonia-containing gas and the descending circulating liquid is insufficient, causing a part of the ammonia in the gas phase to directly pass through the hollow conical liquid surface formed by the circulating liquid, resulting in poor ammonia absorption efficiency. Although the number of spraying devices can be increased to meet sufficient gas-liquid contact time and achieve complete absorption of ammonia in the gas phase, this would increase the total amount of circulating liquid and increase pump energy consumption, which is obviously uneconomical. When the vertical spacing between two adjacent spraying devices is greater than 1350 mm, with the same number of spraying devices, the height of the column increases, i.e., equipment investment costs increase, and besides, maintenance and repair difficulty also increases.

According to one embodiment, the difference (absolute value) in the spraying liquid input pressures at the spraying liquid inlets of any two spraying devices is less than 0.024 MPa (preferably less than 0.018 MPa, more preferably less than 0.012 MPa). The inventors of the present invention have found that the size of the atomized liquid droplets is closely associated with the pressure at the nozzle. Too high or too low pressure is disadvantageous to the operation of the device. The nozzle pressure originates from the spraying liquid input pressure at the spraying liquid inlet, such that theoretically, it is desired that the spraying liquid input pressures at the spraying liquid inlets are the same. However, in practice, as the multiple layers of spraying devices are arranged vertically, there is a pressure drop loss when the circulation pump delivers the circulating liquid to each layer of spraying devices. Therefore, the pressure difference at the spraying liquid inlets of any two spraying devices should be as low as possible, so that all nozzles of the uppermost and lowest spraying devices meet the optimal pressure conditions.

According to one embodiment, the absorption device has an inner diameter of 4.5-11.5 m (preferably 4.8-10.5 m).

According to one embodiment, the absorption device further comprises a shell and a gas inlet. According to the present invention, the spraying device is arranged inside the shell of the absorption device. In addition, the reaction product is fed into the absorption device through the gas inlet.

According to one embodiment, the gas inlet is located below the spraying device along the central axis direction of the absorption device.

According to one embodiment, the vertical distance between the gas inlet and the spraying liquid inlet of the spraying device (when more than one spraying device are present, referring to the spraying device closest to the gas inlet) is 800-6000 mm (preferably 1000-5000 mm). The inventors of the present invention have found that the gas is fed into the column through the inlet along a downwardly curved semicircular inlet pipe and then is delivered from bottom to top. Relatively speaking, the gas concentration is highest at the inlet pipe. As the gas moves upward, due to the difference in gas concentration, the gas diffuses toward the periphery, and finally the gas concentration on the column cross-section becomes uniform. If the vertical distance is less than 800 mm, the gas concentration may not diffuse sufficiently, resulting in uneven concentrations, which can easily cause local incomplete ammonia absorption and local excess amount of acid. If the vertical distance is too large, on one hand, the tangent height of the ammonia absorption column is too high, increasing equipment investment. On the other hand, as the spraying liquid rotates and falls, colliding droplets undergo behaviors such as separation, coalescence, and breakup, wherein corresponding to the occurrence of coalescence, larger droplets are formed; while corresponding to the occurrence of breakup, smaller droplets are formed. The longer the spray distance of the droplets, the more likely coalescence or breakup occurs, which is also disadvantageous to ammonia absorption.

According to one embodiment, the gas inlet has an inner diameter of 800-1900 mm (preferably 900-1700 mm).

According to one embodiment, the linear velocity of the gas inside the shell is 0.6-1.5 m/s (preferably 0.7-1.3 m/s). The inventors of the present invention have found that the operating velocity inside the shell affects the gas diffusion velocity. The higher the operating velocity inside the shell, the stronger the turbulent effect, which is beneficial for gas diffusion, and thus the diffusion distance is shorter. When the velocity inside the shell is less than 0.6 m/s, relatively speaking, the time required for the gas to diffuse to uniformity is long, i.e., the distance from the inlet to the first layer of spraying device increases. However, when the linear velocity inside the shell is higher than 1.5 m/s, as the droplets of the spraying liquid from the spraying device are usually in the form of mist droplets, with a particle size of 50-5000 µm, these mist droplets are easy to be entrained by the gas. The greater the velocity inside the shell, the more severe the mist entrainment phenomenon, resulting in more ammonium salt-containing mist droplets being carried out of the ammonia absorption column by the gas.

According to one embodiment, in the internal space of the absorption device between the gas inlet and the spraying device (when more than one spraying device are present, referring to the spraying device closest to the gas inlet), no mechanical components that can substantially affect the flowing of gas are arranged, such as mechanical components that disturb the flowing of gas, particularly baffles, trays, packings, etc. The inventors of the present invention have found that although internal components can be added to make the gaseous ammonia uniformly distributed on the cross-section before contacting with the first layer of spraying liquid, any type of mechanical component may increase the system pressure of the device, ultimately reflected in an increase in reaction pressure, reducing the yield of the target product. The smaller the droplet size, the larger the contact surface between the droplet and the gaseous ammonia, and the better the absorption effect, and vice versa, the worse the ammonia absorption effect. Usually, the ammonia absorption efficiency of the first layer of spraying device is relatively highest. As mentioned above, the droplet size is 50-5000 µm, and the ammonia absorption efficiency of the first layer of spraying device is 30-55% or even higher. If the droplets are too large, the ammonia absorption efficiency of the first layer significantly decreases, thereby affecting the total absorption efficiency. However, gas is relatively easy to diffuse. Even if the gaseous ammonia is not completely uniformly distributed at the spraying position of the first layer, the gaseous ammonia continues to diffuse during the rising process and will be captured and absorbed by the spraying liquid of the subsequent layers of spraying devices. Therefore, although adding components here satisfies the purpose of rapid and uniform dispersion of gaseous ammonia, the vertical distance from the first layer of spraying device to the inlet is 800-6000 mm, preferably 1000-5000 mm, which can not only satisfy the efficient reaction of the preceding reaction section and the ammonia absorption efficiency of the current column, but also is more economical for the entire device. According to one embodiment, in the reaction step, the hydrocarbon feedstock is propylene, and the molar ratio of propylene/ammonia/air (calculated as molecular oxygen) is 1:1.1-1.3:1.8-2.0, the reaction temperature is 420-440°C, the reaction pressure (gauge pressure) is 0.03-0.14 MPa, and the catalyst weight hourly space velocity is 0.06-0.15 h⁻¹, or alternatively, the hydrocarbon feedstock is isobutylene, and the molar ratio of isobutylene/ammonia/air (calculated as molecular oxygen) is 1:1.3-1.6:2.2-2.8, the reaction temperature is 395-420°C, the reaction pressure (gauge pressure) is 0.03-0.14 MPa, and the catalyst weight hourly space velocity is 0.08-0.17 h⁻¹.

According to one embodiment, depending on the various reaction steps, the composition of the reaction product comprises generally about 10-20 wt% of C₁₋₄ nitriles (e.g., acrylonitrile, etc.), about 0.1-5 wt% of C₁₋₄ oxygen-containing compounds (e.g., acrolein, etc.), about 0.1-5 wt% of O₂, about 0.1-2 wt% of ammonia, and a balance of other impurities, based on the total weight of the reaction product as 100 wt%.

After preliminary cooling, the reaction product has a temperature of generally 195-235°C, and a pressure of generally 0.03-0.14 MPaG. According to the present invention, for this specific reaction product, the aforementioned technical effects of the producing process of the present invention are particularly excellent.

According to one embodiment, in the cooling step, the spraying liquid cools the reaction product from 195-235°C to 81-86°C. In addition, preferably, the spraying liquid reduces the ammonia content of the reaction product to 150 ppm or less.

According to one embodiment, a device for producing a nitrile is also provided. According to the present invention, the device for producing the nitrile is provided specifically for implementing the aforementioned process for producing the nitrile. Therefore, for content not detailed in the part of the text regarding the device, reference can be made directly to the relevant content described above for the producing process. According to one embodiment, the device for producing the nitrile comprises a reactor, an absorption device, and a pressure controller, wherein the reactor is configured to subject a hydrocarbon feedstock to ammoxidation reaction to produce a reaction product containing nitrile, the absorption device is configured to spray a spraying liquid onto the reaction product through a plurality of spraying devices arranged therein to cool the reaction product, wherein the spraying devices each independently comprise a spraying liquid inlet, a first spraying pipe in fluid communication with the spraying liquid inlet, a plurality of second spraying pipes in fluid communication with the first spraying pipe and extending perpendicularly to the first spraying pipe toward both sides thereof, a plurality of third spraying pipes in fluid communication with the second spraying pipes and extending perpendicularly to the second spraying pipes toward both sides thereof, and nozzles located at the ends of the third spraying pipes and in fluid communication therewith, and the pressure controller is configured to control the spraying liquid input pressure at the spraying liquid inlet of each spraying device to be 0.06-1.00 MPaG (preferably 0.12-0.90 MPaG, more preferably 0.18-0.80 MPaG). According to one embodiment, the absorption device further comprises a shell and a gas inlet. According to the present invention, the spraying device is arranged inside the shell. In addition, the reaction product is fed into the absorption device through the gas inlet.

According to one embodiment, the gas inlet is located below the spraying device along the central axis direction of the absorption device, and the vertical distance between the gas inlet and the spraying liquid inlet of the spraying device (when more than one spraying device are present, referring to the spraying device closest to the gas inlet) is 800-6000 mm (preferably 1000-5000 mm).

A specific embodiment of the present invention will be described in detail below by way of example with reference to the drawings.

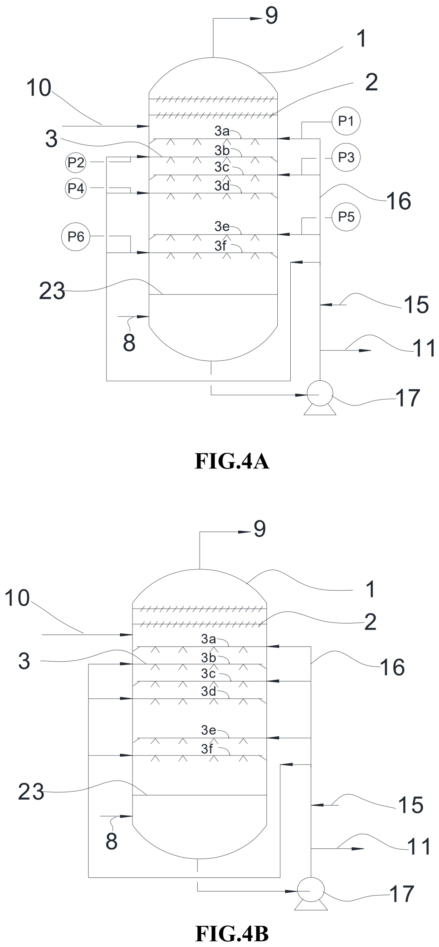

For example, as shown in Fig.4A, according to the present invention, a reaction gas at 225°C and unreacted ammonia is fed into the ammonia absorption column 1 through the ammonia-containing gas feeding inlet 8. The circulating liquid is withdrawn from the bottom of the column and delivered by the circulation pump 17 to the multiple layers of spraying devices 3a-3f. The spraying devices 3a-3f are arranged in the column from top to bottom in sequence, wherein spraying devices 3a, 3c, 3e are placed on a same side, while spraying devices 3b, 3d, 3f are placed on the side opposite to the spraying devices 3a, 3c, 3e. The vertical distance between the ammonia-containing gas feeding inlet 8 and the spraying device 3f is 1800 mm. The spraying liquid input pressures at the spraying liquid inlets of spraying devices 3a, 3c, 3e are 0.327 MPaG, 0.330 MPaG, and 0.334 MPaG, respectively. Sulfuric acid is added through the acid-containing solution inlet 15 to the outlet pipeline of the circulation pump. The circulating liquid is delivered through the spraying device 3, fed in through the inlet 18 of the spraying device, and passed along the fluid direction through the first spraying pipe 19, the second spraying pipes 20a (20b), and the third spraying pipes 21 to the atomizing nozzles 22. The circulating liquid ejected out through the nozzles 22 forms an acid mist layer in the ammonia absorption column, absorbing the gaseous ammonia from the gas feeding inlet 8. The tail gas is discharged from the gas phase outlet 9 of the ammonia absorption column. The temperature of the top tail gas is 84°C. The projections of the ends of the third spraying pipes of spraying devices 3a-3f coincide on the column cross-section, as shown in Fig.5.

### Examples

The present invention will be further illustrated referring to the following Examples in more detail, but the present invention is not limited to these Examples.

### Example 1

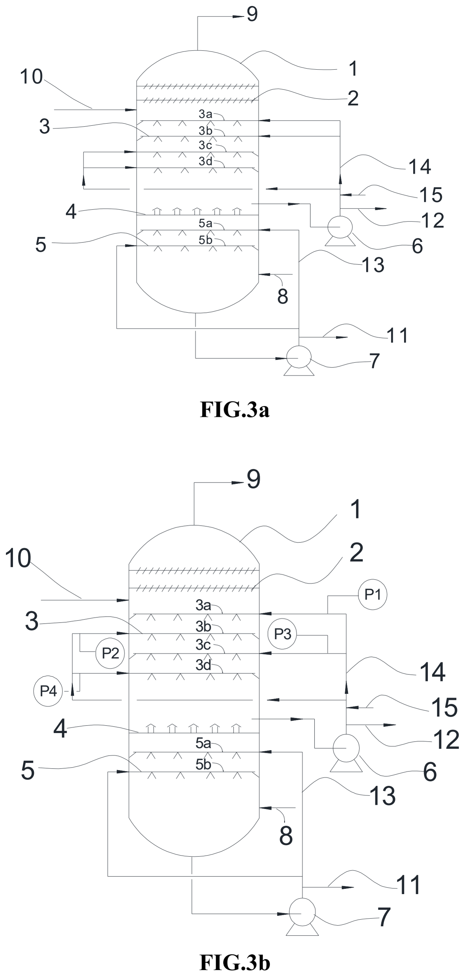

The ammonia absorption column had a two-stage structure as shown in Fig.3b. The inner diameter of the absorption column was 7200 mm, and no gas distributor 23 was arranged inside the column. The linear velocity of the reaction gas in the column was 1.1 m/s. The acid added to the circulating liquid was sulfuric acid. The acid-containing circulating liquid was fed to the absorption column through 4 spraying devices via an upper section circulation pump. The fluid directions in the first spraying pipes of spraying devices 3a, 3c were opposite to those of 3b, 3d. The spraying liquid input pressures at the spraying liquid inlets of spraying devices 3a(b) and 3c(d) were 0.440 MPaG and 0.446 MPaG, respectively. The spraying liquid ejection pressure was 0.051 MPaG. The interval distance between two adjacent spraying devices was 1200 mm. Each spraying device had 16 second spraying pipes, and the second spraying pipes were equipped with 11 to 18 third spraying pipes. The first spraying pipe of the spraying device had an inner diameter of 250 mm and a length of 7000 mm. The spacing distance of the second spraying pipes of the spraying device was 820 mm, and the second spraying pipes had an inner diameter of 100 mm and a length of 2100-3450 mm. The interval distance between two adjacent spraying devices was 1200 mm. The spacing of the third spraying pipes of the spraying device was 410 mm, and the third spraying pipes had an inner diameter of 40 mm and a length of 205 mm. The spraying device had a total of 960 nozzles. The nozzle outlet diameter was 11.5 mm, the nozzle rotating chamber diameter was 40 mm, and the spray angle of the nozzles was 75°. The vertical distance from the gas feeding inlet 8 to the spraying device 3d was 4000 mm, and the inner diameter of the feeding inlet was 1300 mm. The reaction product gas fed through the feeding inlet contained about 0.71 wt% of ammonia, 13.2 wt% of acrylonitrile, and balance of impurities such as O₂, acrolein, nitrogen, etc., having a temperature of 225°C and a pressure of 0.06 MPaG. The spraying liquid ejection rate per nozzle was 4.8 t/h, and the weight ratio of the spraying liquid to the reaction product gas fed in through the gas inlet was 20. At the initial period of the operation of the device, the residual ammonia concentration in the tail gas at the reaction outlet was 41 ppm. After 24 months of operation, the residual ammonia concentration in the tail gas at the reaction outlet was 52 ppm.

### Example 2

The ammonia absorption column had a single-stage structure as shown in Fig.4. The inner diameter of the absorption column was 7200 mm, and no gas distributor 23 was arranged inside the column. The linear velocity of the reaction gas in the column was 1.1 m/s. The acid added to the circulating liquid was sulfuric acid. The acid-containing circulating liquid was delivered to the absorption column through 6 spraying devices via a circulation pump. The fluid directions in the first spraying pipes of spraying devices 3a, 3c, 3e were opposite to those of 3b, 3d, 3f. The spraying liquid input pressures at the spraying liquid inlets of spraying devices 3a(b), 3c(d), and 3e(f) were 0.425 MPaG, 0.430 MPaG, and 0.435 MPaG, respectively. The spraying liquid ejection pressure was respectively 0.055 MPaG. The vertical spacing between two adjacent spraying devices was 880 mm. Each spraying device had 14 second spraying pipes, and the second spraying pipes were equipped with 6 to 14 third spraying pipes. The first spraying pipe of the spraying device had an inner diameter of 200 mm and a length of 7000 mm. The spacing of the second spraying pipes of the spraying device was 1000 mm, and the second spraying pipes had an inner diameter of 100 mm and a length of 1850-3450 mm. The spacing of the third spraying pipes of the spraying device was 500 mm, and the third spraying pipes had an inner diameter of 40 mm and a length of 250 mm. The projections of the ends of the third spraying pipes of the spraying devices coincided, and the distance between the ends of two adjacent third spraying pipes as shown in Fig.6A was 500 mm. The spraying device had a total of 912 nozzles. The nozzle outlet diameter of the spraying device was 11.7 mm, the nozzle rotating chamber diameter was 36 mm, and the spray angle was 80°. The vertical distance from the gas feeding inlet 8 to the spraying device 3f was 1500 mm, and the inner diameter of the feeding inlet was 1200 mm. The reaction product gas fed through the feeding inlet contained about 0.71 wt% of ammonia, 13.2 wt% of acrylonitrile, and balance of impurities such as O₂, acrolein, nitrogen, etc., having a temperature of 225°C and a pressure of 0.06 MPaG. The spraying liquid ejection rate per nozzle was 5.1 t/h, and the weight ratio of the spraying liquid to the reaction product gas passed through the gas inlet was 20. At the initial period of the operation of the device, the residual ammonia concentration in the tail gas at the reaction outlet was 27 ppm. After 24 months of operation, the residual ammonia concentration in the tail gas at the reaction outlet was 34 ppm.

### Example 3

Example 2 was repeated, except that the spraying liquid input pressures at the spraying liquid inlets of spraying devices 3a(b), 3c(d), and 3e(f) were 0.152 MPaG, 0.160 MPaG, and 0.168 MPaG, respectively, the spraying liquid ejection pressure was respectively 0.04 MPaG, and the nozzle outlet diameter of the spraying device was 11.9 mm. At the initial period of the operation of the device, the residual ammonia concentration in the tail gas at the reaction outlet was 72 ppm. After 24 months of operation, the residual ammonia concentration in the tail gas at the reaction outlet was 98 ppm.

### Example 4

Example 2 was repeated, except that the spraying liquid input pressures at the spraying liquid inlets of spraying devices 3a(b), 3c(d), and 3e(f) were 0.838 MPaG, 0.844 MPaG, and 0.85 MPaG, respectively, the spraying liquid ejection pressure was respectively 0.42 MPaG, and the nozzle outlet diameter of the spraying device was 12.1 mm. At the initial period of the operation of the device, the residual ammonia concentration in the tail gas at the reaction outlet was 84 ppm. After 24 months of operation, the residual ammonia concentration in the tail gas at the reaction outlet was 92 ppm.

### Example 5

Example 2 was repeated, except that the spraying liquid input pressures at the spraying liquid inlets of spraying devices 3a(b), 3c(d), and 3e(f) were 0.950 MPaG, 0.954 MPaG, and 0.959 MPaG, respectively, the spraying liquid ejection pressure was respectively 0.42 MPaG, and the nozzle outlet diameter of the spraying device was 11.1 mm. At the initial period of the operation of the device, the residual ammonia concentration in the tail gas at the reaction outlet was 105 ppm. After 24 months of operation, the residual ammonia concentration in the tail gas at the reaction outlet was 116 ppm.

### Example 6

Example 2 was repeated, except that the spraying liquid input pressures at the spraying liquid inlets of spraying devices 3a(b), 3c(d), and 3e(f) were 0.098 MPaG, 0.103 MPaG, and 0.108 MPaG, respectively, the spraying liquid ejection pressure was respectively 0.04 MPaG, and the nozzle outlet diameter of the spraying device was 12.3 mm. At the initial period of the operation of the device, the residual ammonia concentration in the tail gas at the reaction outlet was 132 ppm. After 24 months of operation, the residual ammonia concentration in the tail gas at the reaction outlet was 181 ppm.

### Example 7

Example 2 was repeated, except that the vertical spacing between two adjacent spraying devices was 1200 mm, and the distance between the ends of two adjacent third spraying pipes as shown in Fig.6B was 707 mm. The nozzle outlet diameter of the spraying device was 11.8 mm, and the spraying liquid ejection rate per nozzle was 5.8 t/h. At the initial period of the operation of the device, the residual ammonia concentration in the tail gas at the reaction outlet was 68 ppm. After 24 months of operation, the residual ammonia concentration in the tail gas at the reaction outlet was 96 ppm.

### Example 8

Example 2 was repeated, except that the vertical spacing between two adjacent spraying devices was 1200 mm, each spraying device had 18 second spraying pipes, the second spraying pipes were equipped with 7 to 20 third spraying pipes, the spacing of the second spraying pipes of the spraying device was 670 mm, the second spraying pipes had an inner diameter of 80 mm, and the distance between the ends of two adjacent third spraying pipes as shown in Fig.6A was 335 mm. The spraying device had a total of 2000 nozzles. The nozzle outlet diameter of the spraying device was 11.3 mm, the nozzle rotating chamber diameter was 30 mm, and the spray angle was 65°. The spraying liquid ejection rate per nozzle was 2.64 t/h. At the initial period of the operation of the device, the residual ammonia concentration in the tail gas at the reaction outlet was 86 ppm. After 24 months of operation, the residual ammonia concentration in the tail gas at the reaction outlet was 105 ppm.

### Example 9

Example 2 was repeated, except that the spraying liquid input pressures at the spraying liquid inlets of spraying devices 3a(b), 3c(d), and 3e(f) were 0.376 MPaG, 0.380 MPaG, and 0.385 MPaG, respectively; the spraying liquid ejection pressure was respectively 0.045 MPaG, the vertical spacing between two adjacent spraying devices was 550 mm, and the distance between the ends of two adjacent third spraying pipes as shown in Fig.6B was 707 mm. At the initial period of the operation of the device, the residual ammonia concentration in the tail gas at the reaction outlet was 120 ppm. After 24 months of operation, the residual ammonia concentration in the tail gas at the reaction outlet was 162 ppm.

### Example 10

Example 2 was repeated, except that the vertical spacing between two adjacent spraying devices was 1200 mm, each spraying device had 24 second spraying pipes, the second spraying pipes were equipped with 9 to 24 third spraying pipes, the spacing of the second spraying pipes of the spraying device was 580 mm, the second spraying pipes had an inner diameter of 80 mm, and the distance between the ends of two adjacent third spraying pipes as shown in Fig.6A was 290 mm. The spraying device had a total of 2640 nozzles. The nozzle outlet diameter of the spraying device was 9.1 mm, the nozzle rotating chamber diameter was 30 mm, and the spray angle was 65°. The spraying liquid ejection rate per nozzle was 2.0 t/h. At the initial period of the operation of the device, the residual ammonia concentration in the tail gas at the reaction outlet was 146 ppm. After 24 months of operation, the residual ammonia concentration in the tail gas at the reaction outlet was 185 ppm.

### Example 11

Example 2 was repeated, except that the spraying liquid ejection rate per nozzle was 8.5 t/h, and the weight ratio of the spraying liquid to the reaction product gas fed through the gas inlet was 32. After 1 month of operation, the residual ammonia concentration in the tail gas at the reaction outlet was 85 ppm. After 24 months of operation, the residual ammonia concentration in the tail gas at the reaction outlet was 99 ppm.

### Example 12

Example 2 was repeated, except that the spraying liquid ejection rate per nozzle was 1.5 t/h, and the weight ratio of the spraying liquid to the reaction product gas fed through the gas inlet was 11. After 1 month of operation, the residual ammonia concentration in the tail gas at the reaction outlet was 145 ppm. After 24 months of operation, the residual ammonia concentration in the tail gas at the reaction outlet was 178 ppm.

### Example 13

Example 2 was repeated, except that the inlets of spraying devices 3a-3f were arranged at different orientations of the equipment; wherein the first spraying pipes of the spraying devices 3a-3f coincided in projection on the cross-section, but the second spraying pipes, third spraying pipes, and nozzles did not coincide in projection on the cross-section. After 1 month of operation, the residual ammonia concentration in the tail gas at the reaction outlet was 137 ppm. After 24 months of operation, the residual ammonia concentration in the tail gas at the reaction outlet was 148 ppm.

### Example 14

Example 2 was repeated, except that along the fluid direction, the nozzle diameter on the 1st to 11th second spraying pipes of the first spraying pipe was 36 mm, and the nozzle diameter on the 12th to 14th second spraying pipes of the first spraying pipe was 32 mm. After 1 month of operation, the residual ammonia concentration in the tail gas at the reaction outlet was 63 ppm. After 24 months of operation, the residual ammonia concentration in the tail gas at the reaction outlet was 99 ppm.

### Example 15

Example 2 was repeated, except that the vertical spacing between two adjacent spraying devices was 1250 mm. At the initial period of the operation of the device, the residual ammonia concentration in the tail gas at the reaction outlet was 77 ppm. After 24 months of operation, the residual ammonia concentration in the tail gas at the reaction outlet was 85 ppm.

### Example 16

Example 2 was repeated, except that the vertical spacing between two adjacent spraying devices was 720 mm. At the initial period of the operation of the device, the residual ammonia concentration in the tail gas at the reaction outlet was 111 ppm. After 24 months of operation, the residual ammonia concentration in the tail gas at the reaction outlet was 129 ppm.

### Example 17

Example 2 was repeated, except that the vertical spacing between two adjacent spraying devices was 1650 mm. At the initial period of the operation of the device, the residual ammonia concentration in the tail gas at the reaction outlet was 177 ppm. After 24 months of operation, the residual ammonia concentration in the tail gas at the reaction outlet was 195 ppm.

### Example 18

Example 2 was repeated, except that the spraying liquid input pressures at the spraying liquid inlets of spraying devices 3a(b), 3c(d), and 3e(f) were 0.405 MPaG, 0.421 MPaG, and 0.435 MPaG, respectively. At the initial period of the operation of the device, the residual ammonia concentration in the tail gas at the reaction outlet was 65 ppm. After 24 months of operation, the residual ammonia concentration in the tail gas at the reaction outlet was 89 ppm.

### Example 19

Example 2 was repeated, except that the spraying liquid input pressures at the spraying liquid inlets of spraying devices 3a(b), 3c(d), and 3e(f) were 0.327 MPaG, 0.352 MPaG, and 0.376 MPaG, respectively. At the initial period of the operation of the device, the residual ammonia concentration in the tail gas at the reaction outlet was 112 ppm. After 24 months of operation, the residual ammonia concentration in the tail gas at the reaction outlet was 145 ppm.

### Example 20

Example 1 was repeated, except that the vertical distance from the gas inlet to the spraying device 3f was 6000 mm. At the initial period of the operation of the device, the residual ammonia concentration in the tail gas at the reaction outlet was 77 ppm. After 24 months of operation, the residual ammonia concentration in the tail gas at the reaction outlet was 85 ppm.

### Example 21

Example 2 was repeated, except that the vertical distance from the gas inlet to the spraying device 3f was 8000 mm. At the initial period of the operation of the device, the residual ammonia concentration in the tail gas at the reaction outlet was 90 ppm. After 24 months of operation, the residual ammonia concentration in the tail gas at the reaction outlet was 106 ppm. However, due to the increased total height of the column equipment, the equipment investment cost was increased, and at the same time, the maintenance difficulty of the device was also increased.

### Example 22

Example 2 was repeated, except that the vertical distance from the gas inlet to the spraying device 3f was 900 mm. At the initial period of the operation of the device, the residual ammonia concentration in the tail gas at the reaction outlet was 125 ppm. After 24 months of operation, the residual ammonia concentration in the tail gas at the reaction outlet was 142 ppm.

### Example 23

Example 2 was repeated, except that the vertical distance from the gas inlet to the spraying device 3f was 500 mm. At the initial period of the operation of the device, the residual ammonia concentration in the tail gas at the reaction outlet was 182 ppm. After 24 months of operation, the residual ammonia concentration in the tail gas at the reaction outlet was 219 ppm.

### Example 24

Example 2 was repeated, except that a gas distributor 23 was arranged inside the column, as shown in Fig.4B. The residual ammonia concentration in the tail gas at the reaction outlet was 35 ppm. After adding the gas distribution internal component, the pressure at the bottom of the ammonia absorption column was increased by 10 kPa, causing the reaction pressure of the system preceding the ammonia absorption column to increase by 10 kPa, and the yield of the target product nitrile was decreased by 1.5%.

### Example 25

Example 2 was repeated, except that the linear velocity of the reaction gas in the column was 0.6 m/s, and the spraying liquid ejection rate per nozzle was 2.8 t/h. At the initial period of the operation of the device, the residual ammonia concentration in the tail gas at the reaction outlet was 82 ppm. After 24 months of operation, the residual ammonia concentration in the tail gas at the reaction outlet was 99 ppm.

### Example 26

Example 2 was repeated, except that the linear velocity of the reaction gas in the column was 1.4 m/s, the spraying liquid ejection rate per nozzle was 5.1 t/h, and the weight ratio of the spraying liquid to the reaction product gas fed through the gas inlet was 17. At the initial period of the operation of the device, the residual ammonia concentration in the tail gas at the reaction outlet was 132 ppm. After 24 months of operation, the residual ammonia concentration in the tail gas at the reaction outlet was 154 ppm.

### Example 27

Example 2 was repeated, except that the linear velocity of the reaction gas in the column was 0.4 m/s, and the spraying liquid ejection rate per nozzle was 2.0 t/h. At the initial period of the operation of the device, the residual ammonia concentration in the tail gas at the reaction outlet was 173 ppm. After 24 months of operation, the residual ammonia concentration in the tail gas at the reaction outlet was 195 ppm.

### Example 28

Example 2 was repeated, except that the linear velocity of the reaction gas in the column was 1.9 m/s, the spraying liquid ejection rate per nozzle was 6.2 t/h, and the weight ratio of the spraying liquid to the reaction product gas fed through the gas inlet was 15. At the initial period of the operation of the device, the residual ammonia concentration in the tail gas at the reaction outlet was 182 ppm. After 24 months of operation, the residual ammonia concentration in the tail gas at the reaction outlet was 199 ppm.

### Example 29

Example 2 was repeated, except that the spraying liquid input pressures at the spraying liquid inlets of spraying devices 3a(b), 3c(d), and 3e(f) were 0.212 MPaG, 0.220 MPaG, and 0.228 MPaG, respectively, the spraying liquid ejection pressure was respectively 0.04 MPaG, and the nozzle outlet diameter of the spraying device was 11.9 mm. At the initial period of the operation of the device, the residual ammonia concentration in the tail gas at the reaction outlet was 60 ppm. After 24 months of operation, the residual ammonia concentration in the tail gas at the reaction outlet was 81 ppm.

### Example 30

Example 2 was repeated, except that the spraying liquid input pressures at the spraying liquid inlets of spraying devices 3a(b), 3c(d), and 3e(f) were 0.780 MPaG, 0.784 MPaG, and 0.789 MPaG, respectively, and the spraying liquid ejection pressure was respectively 0.42 MPaG. At the initial period of the operation of the device, the residual ammonia concentration in the tail gas at the reaction outlet was 65 ppm. After 24 months of operation, the residual ammonia concentration in the tail gas at the reaction outlet was 96 ppm.

### Example 31

Example 2 was repeated, except that the spraying liquid input pressures at the spraying liquid inlets of spraying devices 3a(b), 3c(d), and 3e(f) were 0.185 MPaG, 0.190 MPaG, and 0.195 MPaG, respectively, and the vertical distance from the gas inlet to the spraying device 3f was 1000 mm. At the initial period of the operation of the device, the residual ammonia concentration in the tail gas at the reaction outlet was 85 ppm. After 24 months of operation, the residual ammonia concentration in the tail gas at the reaction outlet was 112 ppm.

### Example 32

Example 2 was repeated, except that the spraying liquid input pressures at the spraying liquid inlets of spraying devices 3a(b), 3c(d), and 3e(f) were 0.79 MPaG, 0.795 MPaG, and 0.801 MPaG, respectively, and the vertical distance from the gas inlet to the spraying device 3f was 4800 mm. At the initial period of the operation of the device, the residual ammonia concentration in the tail gas at the reaction outlet was 91 ppm. After 24 months of operation, the residual ammonia concentration in the tail gas at the reaction outlet was 116 ppm.

### Comparative Example 1

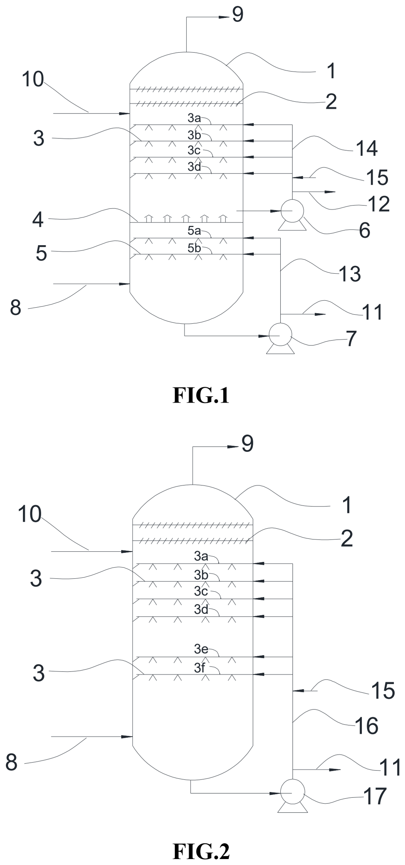

Example 1 was repeated, except that the ammonia absorption column had a two-stage structure as shown in Fig.1. The spraying liquid input pressures at the spraying liquid inlets of spraying devices 3a, 3b, 3c, 3d were 0.04 MPaG, 0.044 MPaG, 0.046 MPaG, and 0.051 MPaG, respectively. The spraying liquid ejection pressure was 0.02 MPaG, and the nozzle outlet diameter was 14.2 mm. At the initial period of the operation of the device, the residual ammonia concentration in the tail gas at the reaction outlet was 400 ppm. After 24 months of operation, the residual ammonia concentration in the tail gas at the reaction outlet was 529 ppm.

### Comparative Example 2

Example 2 was repeated, except that the ammonia absorption column had a single-stage structure as shown in Fig.2. The spraying liquid input pressures at the spraying liquid inlets of spraying devices 3a, 3b, 3c, 3d, 3e, and 3f were 1.202 MPaG, 1.205 MPaG, 1.209 MPaG, 1.214 MPaG, 1.217 MPaG, and 1.220 MPaG, respectively. The spraying liquid ejection pressure was 0.076 MPaG. At the initial period of the operation of the device, the residual ammonia concentration in the tail gas at the reaction outlet was 85 ppm. After 24 months of operation, the residual ammonia concentration in the tail gas at the reaction outlet was 96 ppm. However, 1.5% of ammonium sulfate was detected in the condensate of the tail gas from the ammonia absorption column outlet.

## Claims

1. A process for producing a nitrile, comprising a step of subjecting a hydrocarbon feedstock to an ammoxidation reaction to produce a reaction product containing the nitrile (called as a reaction step), and a step of spraying a spraying liquid to the reaction product through a spraying device to cool the reaction product (called as a cooling step), wherein the spraying device comprises a spraying liquid inlet, a first spraying pipe in fluid communication with the spraying liquid inlet, a plurality of second spraying pipes in fluid communication with the first spraying pipe and extending perpendicularly to the first spraying pipe toward both sides thereof, a plurality of third spraying pipes in fluid communication with the second spraying pipes and extending perpendicularly to the second spraying pipes toward both sides thereof, and nozzles located at the ends of the third spraying pipes and in fluid communication therewith, wherein in the cooling step, the spraying liquid input pressure at the spraying liquid inlet is controlled to be 0.06-1.00 MPaG (preferably 0.12-0.90 MPaG, more preferably 0.18-0.80 MPaG).

2. The producing process according to claim 1, wherein on two adjacent second spraying pipes, the linear distance, M, between the end of an arbitrary third spraying pipe on one second spraying pipe and the end of an arbitrary third spraying pipe on the other adjacent second spraying pipe is not less than 320 mm (preferably not less than 350 mm), and/or, the nozzles are the same as or different from each other, each independently having a spraying liquid ejection rate of 0.5-7.5 t/h (preferably 0.9-6.5 t/h), and/or, the nozzles are the same as or different from each other, each independently having a spraying liquid ejection pressure at the nozzle outlet of 0.03-0.85 MPaG (preferably 0.04-0.65 MPaG), and/or, in the cooling step, the flow ratio of the spraying liquid to the reaction product is 15-25:1.

3. The producing process according to claim 1, wherein the cooling step is carried out in an absorption device, and a plurality of (e.g., 2-10, preferably 4-8) the spraying devices are arranged in layers inside the absorption device along the central axis direction of the absorption device at a predetermined vertical interval.

4. The producing process according to claim 3, wherein when a cross-section is obtained by cutting the absorption device at a direction perpendicular to the central axis of the absorption device, at least one (preferably all) selected from the first spraying pipe, the second spraying pipes and the third spraying pipes on one of the plurality of spraying devices and at least one (preferably all) selected from the first spraying pipe, the second spraying pipes, and the third spraying pipes on any other of the plurality of spraying devices substantially coincide in terms of the projection on the cross-section.

5. The producing process according to claim 4, wherein all nozzles of said one spraying device and those of said any other spraying device substantially coincide in terms of the projection on the cross-section, and/or, two nozzles whose projections substantially coincide have the same spray diameter.

6. The producing process according to claim 3, wherein the vertical spacing between two adjacent spraying devices (calculated as the vertical spacing between the spraying liquid inlets of the two spraying devices) is 650-1350 mm (preferably 750-1200 mm).

7. The producing process according to claim 3, wherein the difference (absolute value) in the spraying liquid input pressures at the spraying liquid inlets of any two spraying devices is less than 0.024 MPa (preferably less than 0.018 MPa, more preferably less than 0.012 MPa).

8. The producing process according to claim 3, wherein the absorption device further comprises a shell and a gas inlet, wherein the reaction product is fed into the absorption device through the gas inlet, and the gas inlet is located below the spraying device along the central axis direction of the absorption device.

9. The producing process according to claim 8, wherein the vertical distance between the gas inlet and the spraying liquid inlet of the spraying device (when more than one spraying devices are present, referring to the spraying device closest to the gas inlet) is 800-6000 mm (preferably 1000-5000 mm), and/or, the gas inlet has an inner diameter of 800-1900 mm (preferably 900-1700 mm), and/or, the linear velocity of the gas inside the shell is 0.6-1.5 m/s (preferably 0.7-1.3 m/s).

10. The process according to claim 8, wherein in the internal space of the absorption device between the gas inlet and the spraying device (when more than one spraying devices are present, referring to the spraying device closest to the gas inlet), no mechanical component which may substantially affect the gas flow is arranged.

11. A device for producing nitrile, comprising a reactor, an absorption device, and a pressure controller, wherein the reactor is configured to subject a hydrocarbon feedstock to an ammoxidation reaction to produce a reaction product containing the nitrile, the absorption device is configured to spray a spraying liquid to the reaction product through a plurality of spraying devices arranged therein to cool the reaction product, wherein the spraying devices each independently comprise a spraying liquid inlet, a first spraying pipe in fluid communication with the spraying liquid inlet, a plurality of second spraying pipes in fluid communication with the first spraying pipe and extending perpendicularly to the first spraying pipe toward both sides thereof, a plurality of third spraying pipes in fluid communication with the second spraying pipes and extending perpendicularly to the second spraying pipes toward both sides thereof, and nozzles located at the ends of the third spraying pipes and in fluid communication therewith, and the pressure controller is configured to control the spraying liquid input pressure at the spraying liquid inlet of each spraying device to be 0.06-1.00 MPaG (preferably 0.12-0.90 MPaG, more preferably 0.18-0.80 MPaG).

12. The device according to claim 11, wherein the absorption device further comprises a shell and a gas inlet, wherein the gas inlet is located below the spraying device along the central axis direction of the absorption device, and the vertical distance between the gas inlet and the spraying liquid inlet of the spraying device (when more than one spraying devices are present, referring to the spraying device closest to the gas inlet) is 800-6000 mm (preferably 1000-5000 mm).
